# EUROPÄISCHE PATENTANMELDUNG

(11) **EP 0 808 884 A2**
(43) Veröffentlichungstag der Anmeldung: **26.11.1997**
(21) Anmeldenummer: 97108218.5
(22) Anmeldetag: 21.05.1997
(51) Int. Cl.: C09D 183/10, C08L 85/00, C09D 183/14

(54) **Thermisch härtbarer Zweikomponenten-Lack**

(30) Priorität: 22.05.1996 DE 19961020668
(71) Anmelder: Feinchemie GmbH Sebnitz, D-01855 Sebnitz (DE)
(72) Erfinder: Böttcher, Horst, Dipl. Chem.Prof.Dr.rer.nat.habil., 01196 Dresden (DE); Kallies, Karl-Heinz, 01855 Sebnitz (DE)
(74) Vertreter: Hertz, Oliver, et al

(57) **Zusammenfassung**

Ein thermisch härtbarer Zweikomponenten-Lack enthält mindestens eine flüssige Komponente A, die durch Hydrolyse eines Gemisches eines Tetraalkoxysilans, eines Epoxyalkylsilans und eines Polyols in einem organischem Lösungsmittel gebildet ist, und mindestens eine flüssige Komponente B, die durch Hydrolyse eines Metallalkoholates in einem organischen Lösungsmittel gebildet ist. Der Lack kann zum mechanischen und chemischen Schutz von Formteilen aus Metall, Kunststoff, Holz, Stein oder Glas sowie von polymeren Folien und Geweben verwendet werden.

## Beschreibung

Die Erfindung betrifft einen Zweikomponenten-Lack, insbesondere einen thermisch härtbaren Zweikomponenten-Lack, der zum mechanischen und chemischen Schutz von Formteilen aus Metall, Kunststoff, Holz, Stein oder Glas verwendet werden kann.

Es ist bekannt, daß derzeit zahlreiche Formteile und Gebrauchsgegenstände aus Metall, Kunststoff, Holz, Stein oder Glas mit Überzügen ausgestattet werden, um sie vor mechanischen oder chemischen Schäden zu schützen. Dabei ist eine wichtige Forderung, daß die Überzüge hart, abriebfest und ökologisch unbedenklich sein sollen. Diese Forderung wird von den handelsüblichen organischen Polymeren nur unzureichend erfüllt. Darum besteht ein gegenwärtiger Trend darin, anorganische Überzüge aus Oxiden, Carbiden, Nitriden und Siliciden der Übergangsmetalle (z.B. Aluminiumoxid, Bornitrid) zu nutzen. Die Herstellung der Überzüge erfolgt durch physikalische oder chemische Gasphasenabscheidung. Diese Technik ist geräte- und energieaufwendig, diskontinuierlich und versagt bei komplizierten geometrischen Körpern.

Eine Alternative dazu stellt die Erzeugung von Metalloxid-Überzügen durch Sol-Gel-Technik dar. Dazu stellt man durch Hydrolyse von Metalllalkoxiden stabile Metalloxid-Sole her, die auf beliebigen Trägern durch Aufkonzentration während der Trocknung dünne Metalloxid-Gelfilme bilden, z.B.

Me(OR)ₙ + n/2 H₂O → (MeOₘ)ₛₒₗ + n ROH (1)

(MeOₘ)ₛₒₗ → (MeOₘ)_{gel} (2)

(Me = Metall z.B. Si, Ti, Zr, Sn, Al, R = organischer Rest, z.B. Alkyl, Acyl)

Die dabei erhaltenen reinen Metalloxid-Überzüge sind insbesondere im für Lacküberzüge interessierenden Dikkenbereich mechanisch nicht sehr stabil, da während der Filmbildungsprozesses ein starker Schrumpfungsprozeß stattfindet und der Vernetzungsgrad gering ist. Darum versucht man gegenwärtig, durch Modifizierung der Metalloxid-Solstruktur die Verschleissfestigkeit und Härte der gebildeten Metalloxid-Gelfilme zu verbessern. Ein Weg besteht darin, Gemische unterschiedlicher Metallalkoxide einzusetzen, um miteinander vernetzte Metalloxidgele zu erzeugen, z.B. SiO₂ mit Al₂O₃ (US 5336560 A, US 5324 544 A), mit TiO₂ oder ZrO₂ (DE 421 7432 A1) oder deren Kombination (US 5262 362 A). In ähnlicher Weise wird versucht, die Abriebresistenz durch den Zusatz von Al₂O₃ (US 796 974 A0) oder anderer keramischer Pulver (DE 430 7 665 A) zu verbessern.

Ein anderer Weg versucht die organische Modifizierung der Metalloxid-Sole z. B. durch Kompositbildung mit unterschiedlichen Polymeren (WO 9301 226) oder Harzen (EP 497560 A). Die mechanischen Eigenschaften lassen sich deutlich verbessern, wenn man organofunktionalisierte Alkoxysilane (z. B. mit Acrylatgruppen oder Epoxidgruppen) cokondensiert und nach der Gelbildung thermisch vernetzt. Hierzu wurden z.B. Systeme von Epoxysilanen mit Bisphenolen (DE 352 0749 A1) als Vernetzer vorgeschlagen. Die auf beiden Wegen erhaltenen Überzüge erfüllen nicht in allen Fällen die Forderungen, die hinsichtlich Härte und Abriebfestigkeit an mechanisch stark beanspruchte Gebrauchsgegenstände sowie an die Lagerstabilität der verwendeten Sole gestellt werden. Das praktische Problem besteht darin, daß stark vernetzende Systeme meist geringe Standzeiten aufweisen, da bereits nach der Herstellung der Beschichtungslösungen eine langsame Vernetzung einsetzt, die zu einer zunehmenden Verfestigung vor dem Beschichtungsprozeß führt. Andererseits liefern standzeitstabile Beschichtungslösungen häufig unbefriedigende mechanischen Werte, da der Vernetzungsgrad der Schicht unzureichend ist.

Es besteht also die Aufgabe der Erfindung darin, neue Möglichkeiten zur Herstellung von Beschichtungmitteln auf Sol-Gel-Basis zu finden, die eine Langzeitstabilität gewährleisten und eine effektive Vernetzung während der Schichtbildung ermöglichen, sowie einen entsprechenden Lack und eine Verfahrensweise zu dessen Aufbringung anzugeben.

Diese Aufgabe wird durch die Gegenstände der Patentansprüche 1 sowie 9 und 12 gelöst. Vorteilhafte Ausführungsformen der Erfindung ergeben sich aus den Unteransprüchen.

Überraschenderweise konnte die Aufgabe mit einfachen Mitteln erfindungsgemäß insbesondere dadurch gelöst werden, daß zwei modifizierte Metalloxidsole kombiniert werden (im folgenden als Komponente A und B bezeichnet), die erst bei Erwärmung effektiv vernetzt werden.

Die Komponente A besteht dabei erfindungsgemäß aus einer Lösung, die durch saure oder alkalisch katalysierte Hydrolyse eines Gemisches eines Tetraalkoxysilans (I), eines Epoxyalkyltrialkoxysilans (II) und eines Polyols (III) in einem organischen Lösungsmittel gebildet wird. Die 3 Bestandteile haben folgende Funktion:
- das Tetraalkoxysilan (I) erhöht durch Cokondensation mit (II) die Stabilität und das Standzeitverhalten der Komponente A und verbessert die Schichtqualität,
- das Epoxyalkyl-trialkoxysilans (II) ergibt durch Cokondensation mit (I) ein durch Epoxid- bzw. (nach teilweiser Ringöffnung) Dihydroxyalkyl-substituiertes SiO₂-Sol, das zur Vernetzung mit Polyolen befähigt ist,
- das Polyol (III) wirkt als Vernetzer. Um eine effektive dreidimensionale Vernetzung in der Schicht zu erreichen, werden als Polyole besonders aliphatische Verbinbindungen mit mindestens 3 Hydroxyl-Gruppen wie z.B. Glycerin, Pentaerythrit oder 1,1,1-Tris-(hydroxymethyl)-propan verwendet. Die Vernetzung erfolgt durch Reaktion der Epoxidgruppen bzw. daraus gebildeten Diolen mit dem aliphatischen Polyol III durch Polyaddition bzw. Polykondensation insbesonders während der Schichtbildung und deren Temperung. Natürlich können auch Diole wie Polyethylenglykol 600, Bis-(4-hydroxyphenyl)-sulfon oder 2,2-Bis-(4-hydroxyphenyl)-propan eingesetzt werden. Aufgrund ihres geringeren Vernetzungsgrades sowie ihres hohen Molekulargewichtes resultieren vergleichsweise schlechtere physikalisch mechanische Parameter, vgl. Tabelle 1.

Die Mengenverhältnisse der 3 Bestandteile zueinander sowie das Lösungsmittel können in weiten Grenzen variiert werden. Vorzugsweise werden zur Hydrolyse Gemische aus 10 bis 80 Teile eines Tetraalkoxysilan, 10 bis 80 Teilen eines Epoxyalkyltrialkoxysilans und 1 bis 20 Teilen eines Polyols eingesetzt. Die Hydrolyse kann sowohl durch verdünnte Säuren, z.B. verdünnte Salzsäure, oder verdünnte Alkalien, wie wäßriger Ammoniak oder Natronlauge, katalysiert werden.

Als organische Lösungsmittel können vorrangig Alkohole mit 1 bis 6 Kohlenstoffatomen verwendet werden. Es können aber auch problemlos andere mit Wasser mischbare Lösungsmittel wie Aceton, Dioxan, Acetonitril oder Dimethylformamid verwendet werden.

Die Komponente B besteht erfindungsgemäß aus einer Lösung, die durch saure oder alkalische Hydrolyse eines Titan-, Zirkon- oder Aluminium-alkoholats oder deren Gemische, ggf. unter Zumischung von 0 bis 80 vol-% Tetraalkoxysilan, gebildet wird. Die Zumischung des Tetraalkoxysilans dient der Verbesserung der Lagerstabilität der Komponente B, da bekanntermaßen reine Titandioxid- oder Aluminiumoxid-Sole (im Gegensatz zu den Siliciumdioxid-Solen) zur langsamen Gelierung neigen. Wie im Falle der Komponente A können als organische Lösungsmittel vorrangig Alkohole mit 1 bis 6 Kohlenstoffatomen verwendet werden. Es können aber auch problemlos andere, mit Wasser mischbare Lösungsmittel wie Aceton, Dioxan, Acetonitril oder Dimethylformamid verwendet werden.

Die erfindungsgemäße Herstellung des Zweikomponentenlackes erfolgt durch Mischung der Komponente A und der Komponente B. Dabei führt die gegenseitige Durchdringung der Festkörperstrukturen beim Tempern in synergistischer Weise zu einem zusätzlichen Vernetzungseffekt, vgl. Tabelle 1. Erfindungsgemäß können mehrere Komponenten A und mehrere Komponenten B gemischt werden.

Dazu können bezogen auf die in den Komponenten enthaltenen Feststoffanteile 0.2 bis 10 Teile A mit 1 Teil B gemischt werden werden. Es ist zweckmäßig, die Mischung der stabilen Komponenten A und B erst unmittelbar vor dem Beschichtungsprozeß vorzunehmen, um einen langsamen Viskositätsanstieg des Lackes auszuschließen. Das Ausmaß des Viskositätsanstieges ist in unterschiedlicher Weise von der Konzentration und dem Mischungsverhältnis der Komponenten A und B abhängig.

Die Beschichtung der Formkörper kann durch alle üblichen Auftrags- oder Beschichtungstechniken wie Spincoating, Begießen, Pinseln, Tauchen oder Sprühen erfolgen.

Zur Erzielung guter mechanischer Eigenschaften (Härte, Abrieb) wird die Lackschicht nach Beschichtung, Gelbildung und Entfernen des Lösungsmittel thermisch gehärtet. Dazu sollte der beschichtete Gegenstand mindestens auf 80°C, optimal aber auf 120°C, erwärmt werden. Je niedriger die Temperatur, um so länger sollte die Temperung erfolgen. Die damit verbundene drastische Verbesserung der mechanischen Eigenschaften ist aus den Beispielen Tabelle 1 ersichtlich. In Abhängigkeit von der Mikrowellenresistenz des Schichtträgers kann auch eine Vernetzung der Lackschicht durch Mikrowellenstrahlung erfolgen.

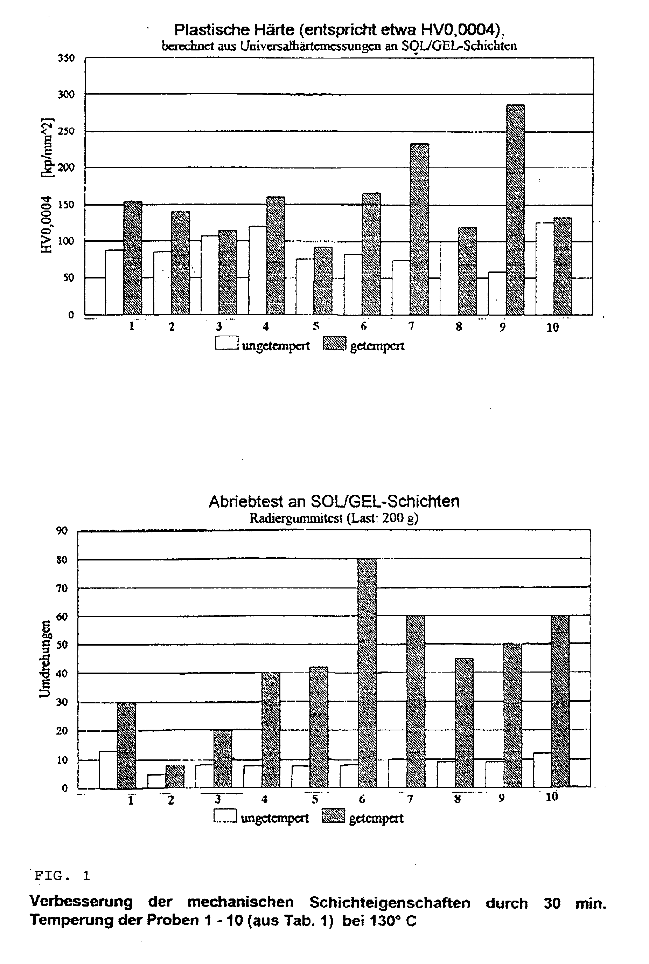

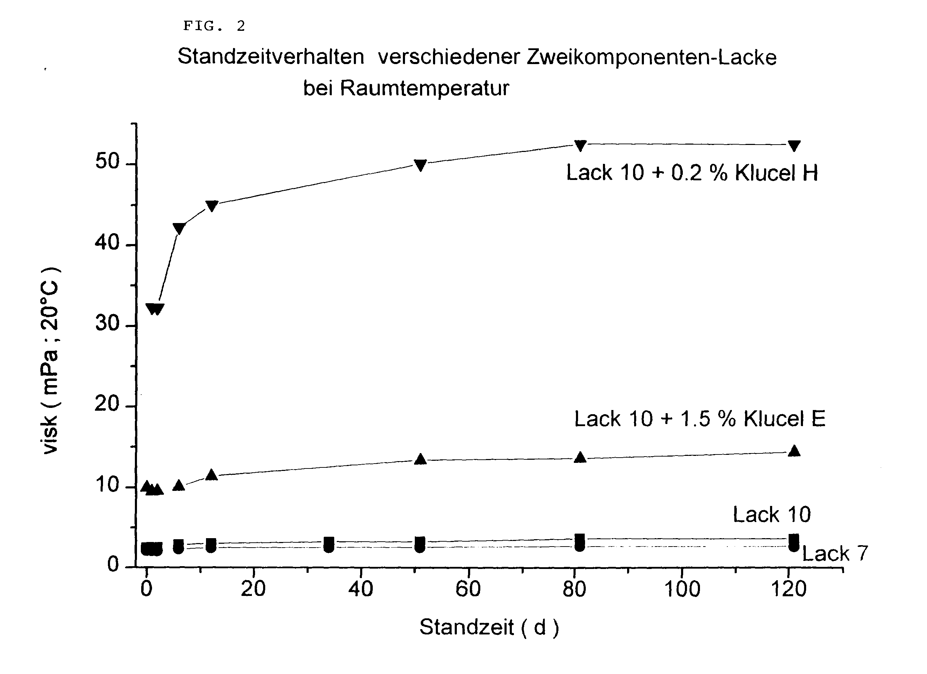

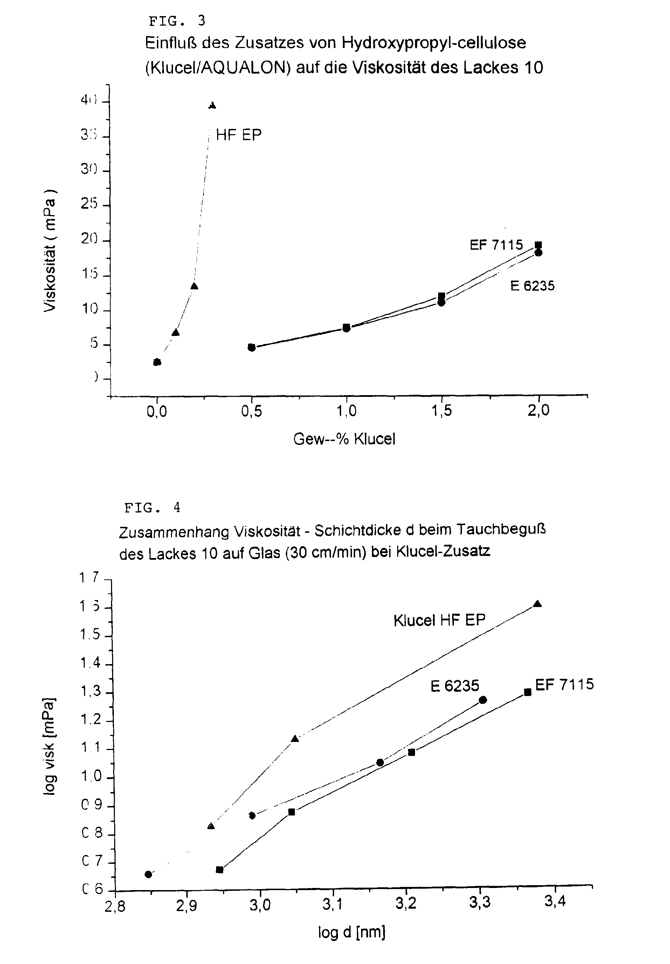

Die Vorteile des erfindungsgemäßen Zweikomponenten-Lackes bestehen gegenüber den bisher bekannten Einkomponentenlacken:
1. in hervorragenden mechanischen Eigenschaften (Härte, Abriebfestigkeit) nach der Temperung der Lackschichten bei vorteilhafter Lagerstabilität der Einzelkomponenten, aufgrund einer optimalen Vernetzung, vgl. Figur 1,
2. in der vorteilhafter Lagerstabilität der Einzelkomponenten und einer excellenten Lagerstabilität der Lackmischung, vgl. Figur 2,
3. in der guten Reproduzierbarkeit der Eigenschaften, da die Hydrolyseprozesse der Silicium- und Titan-, Zirkon- bzw. Aluminium-alkoholate in getrennter (und damit reproduzierbarer) Form ablaufen,
4. in der Möglichkeit, durch Veränderung des Mischungsverhältnisses der Komponenten A (enthält SiO₂-Sole mit der Brechzahl ca. 1.45) und B (enthält z.B. TiO₂-Sole mit Brechzahl ca. 2.2) die Brechzahl der Schicht zu verändern, um z.B. Interferenzen zu vermeiden,
5. in der Möglichkeit, durch Veränderung des Mischungsverhältnisses A zu B und durch eine thermische Nachbehandlung den Vernetzungsgrad zu verändern und damit die mechanischen Eigenschaften dem späteren Anwendungszweck anzupassen, und
6. in der Möglichkeit, die Lacke für spezielle Anwendungen auch problemlos zu modifizieren, indem den Lacken vor der Beschichtung wasser- oder alkohollösliche Stoffe zugemischt werden.
   (a) Durch den Zusatz von alkohollöslichen Celluloseethern und Celluloseestern im Konzentrationsbereich von 0.05 - 10 % kann man die rheologischen Eigenschaften steuern. Figur 3 zeigt, wie der Zusatz von Hydroxypropylcellulose mit unterschiedlichem Molekulargewicht die Viskosität des Lackes erhöht. Dadurch ist es z.B. möglich, die Schichtdicke des Lackes zu erhöhen.
   (b) Durch den Zusatz von 1 - 20 Gewichtsanteilen alkohollöslicher Naturharze, z.B. von Kolophonium, bezogen auf den Feststoffanteil, kann man die Barrierewirkung gegenüber Gasen (O₂, CO₂) und leichtflüchtigen organischen Stoffen (z.B. flüchtigen Kohlenwasserstoffen) erhöhen.
   (c) Durch den Zusatz von 1 - 20 Gewichtsanteilen alkohollöslicher Polyalkylsiloxane, z.B. Siliconharz NH 2100/Hüls AG, oder Polyoxyalkylensiloxane, z.B. Siliconöl NM 4217 oder NM 4225/Hüls AG, bezogen auf den Feststoffanteil, kann die schmutz- und wasserabweisenden Wirkung verstärkt werden.
   (d) Durch den Zusatz von gelösten Farbstoffen, z. B. von 2-Methoxy-4-amino-azobenzol oder 4-(3-Methylphenylamino)-azobenzen können stabile bronze- oder goldfarbene Überzüge erzeugt werde. Durch den Zusatz z.B. von Ethylviolett, Brilliantgrün oder Rhodamin 6G lassen sich dekorative Überzüge in den Farben blau, grün und rot erzeugen.
   (e) Durch den Zusatz biozider Verbindungen wie Benzoesäure, Sorbinäure, Borsäure oder quartärer Ammoniumsalze wie Cetyltrimethylammoniumbromid lassen sich Schichten mit biozider Wirkung herstellen.

   Werden zur Herstellung des Zweikomponentenlacks in der Komponente B Tetraalkoxytitanate eingesetzt, ergeben sich zwei weitere Vorteile:
7. Durch den Zusatz oxidierender Verbindungen wie z. B. Wasserstoffperoxid oder Benzoylperoxid kann man stabile bronzefarbene Überzüge erhalten. Der goldgelbe Farbton kann durch Temperung noch verstärkt werden. Der Farbton tritt besonders intensiv auf, wenn als Polyol (III) die oben erwähnten aromatischen Diole verwendet werden.
8. die Lackschichten sind nach dem Tempern auf T > 350°C photoaktiv und können zum photokatalytischen Abbau von organischen Schadstoffen und für biozide Zwecke genutzt werden.

Die Anwendungsmöglichkeiten der Lacke sind aufgrund der guten Stabilität und der exzellenten mechanischen Schichteigenschaften sehr vielseitig. Besonders geeignet sind die Zweikomponentenlacke zum mechanischen und chemischen Schutz von Formteilen aus Metall, Kunststoff, Holz, Stein, Glas, polymeren Folien oder Geweben.

Hierbei wirkt sich vorteilhaft aus, daß zur Erzielung optimaler mechanischer Eigenschaften nur moderate Temperungsbedingungen erforderlich sind, die auch organische Formteile (z.B. aus Plastik oder Holz) ohne Schaden überstehen. Durch die aufgezeigten Möglichkeiten der Modifizierung der Lacke können die Lackschichten auch als Barriereschichten (z.B. für den Aromaschutz), für wasser- und schmutzabweisende Imprägnierungen, als dekorative Schichten oder als Schichten mit biozider Wirkung eingesetzt werden.

### Ausführungsbeispiele

Im folgenden werden Ausführungsbeispiele der Erfindung unter Bezug auf die beigefügten Zeichnungen beschrieben. Es zeigen:
Fig. 1: Diagramme zur Illustration der Verbesserung mechanischer Schichteigenschaften erfindungsgemäßer Lacke;
Fig. 2: ein Diagramm zur Illustration des Standzeitverhaltens verschiedener erfindungsgemäßer Lacke bei Raumtemperatur;
Fig. 3: ein Diagramm zur Illustration der Viskosität erfindungsgemäßer Lacke in Abhängigkeit vom Hydroxypropyl-cellulose-Zusatz; und
Fig. 4: ein Diagramm zur Illustration der Viskosität erfindungsgemäßer Lacke in Abhängigkeit von der Schichtdicke beim Tauchbeguß.

### Beispiel 1

### Herstellung der Komponente A:

18 ml Tetraethoxysilan (TEOS), 6 ml 3-Glycidyloxypropyltrimethoxy-silan (GLYMO) werden in 20 ml Ethanol gelöst. Unter Rühren wird dazu eine Lösung von 1 g Bis-(4-hydroxyphenyl)-sulfon (Lösung **A 1**) bzw. von 1 g 2,2-Bis-(4-hydroxy-phenyl)-propan **(A2),** 0.5 g Pentaerythrit **(A3),** 1.0 g Glycerin **(A4)** oder 2 g 1,1,1-Tris-(hydroxymethyl)-propan **(A5)** in 20 ml Ethanol und 5 ml 0.01 N Salzsäure zugetropft und 20 Std. bei Raumtemperatur gerührt. Im Falle des schwerer löslichen Pentaerythrits wurde bei 50°C gearbeitet. Es werden über Wochen stabile Lösungen erhalten.

### Herstellung der Komponente B:

11.36 g Titantetraisopropylat **(B 1)** bzw. 8.52 g Tetraisopropylat und 2.08 g TEOS **(B 2), 5.68** g Tetraisopropylat und 4.16 g TEOS **(B3),** 2.08 g Aluminium-triisopropylat und 6,24 g TEOS **(B4),** bzw. 3.28 g Zirkontetrapropylat und 6.24 g TEOS **(B5)** werden in 70 ml wasserfreien Ethanol oder Isopropanol gelöst. Dazu wird unter Rühren langsam eine Lösung von 2 ml 1 N HCl in 10 ml Ethanol zugetropft. Nach beendeter Katalysator-Zugabe wird 20 Std. bei Raumtemperatur gerührt. Die gemischten Metalloxid-Sole **B2-B5** sind über mehrere Wochen stabil.

### Herstellung eines Zweikomponenten-Lacke

Zur Herstellung der Zweikomponentenlacke werden A und B (wie z. B. in Tabelle 1 angegeben) gemischt. A und B sind praktisch in beliebigen Mengenverhältnissen mischbar, allerdings werden durch das Verhältnis A zu B Vernetzungsgrad, Standzeitverhalten des Lackes sowie Brechzahl und mechanische Eigenschaften der Lackschichten verändert.

In den Beispielen werden unterschiedliche 2 Teile A und 1 Teil B unmittelbar nach der Mischung auf polierte Aluminiumträger oder Glas beschichtet. Zur Beschichtung sind übliche Verfahren wie Tauchen, Sprühen, Schleudern, Pinseln geeignet. Die Schichten trocknen aufgrund der leichtflüchtigen Lösungsmittel sehr schnell. Zur Entfernung von Restlösungsmittel wurden die Schichten ca. 4 Std. bei 50°C im Trockenschrank getrocknet. Zur thermischen Nachhärtung werden die Schichten anschließend mindestens 30 min. auf 80° C erhitzt. Man erhält farblose transparente Schichten von hoher mechanischer Stabilität.

Zur mechanischen Prüfung der Proben wurde die Universal-Mikrohärtemessung mit dem Fischerscope H100 zur Bestimmung des charakteristischen HV-Wertes sowie eine Abriebsmessung mit einem Norm-Radiergummi genutzt. Der mit konstanter Geschwindigkeit rotierende runde Gummi wird dabei mit einer definierten Kraft (20 bzw. 200p) gegen das beschichtete Substrat gedrückt. Die Anzahl der Umdrehungen bis zum Durchreiben der Schicht wird als Maß für die Abriebbeständigkeit gewertet. Die Bestimmung der Schichtdicke erfolgte mit einem Kallottenschliffverfahren. Die Ergebnisse sind in Tabelle 1 und Figur 1 zusammengefaßt.

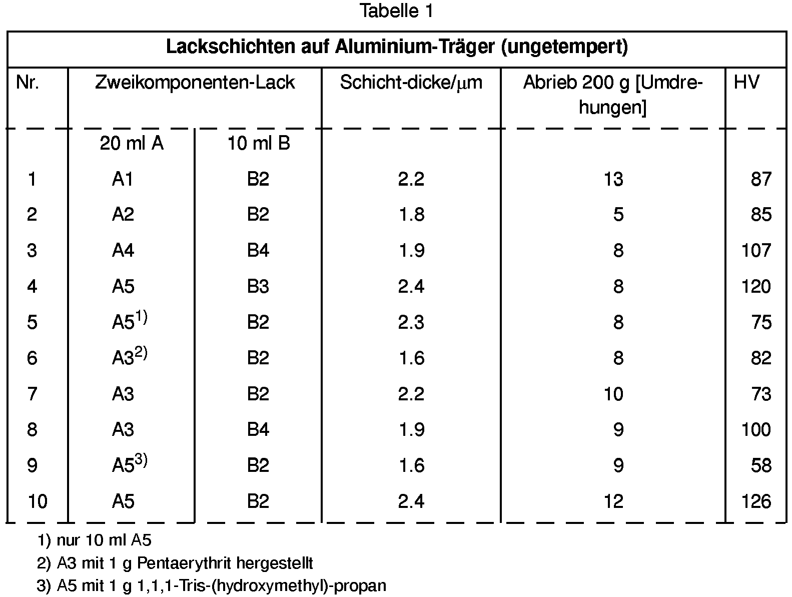

Eine entscheidende Verbesserung der mechanischen Daten erfolgt bereits durch eine moderate Temperung bei 130°C (30 min.). Die entsprechenden Verbesserungen sind aus der Säulengraphik in Figur 1 (jeweils rechter Balken) ersichtlich.

Figur 2 dokumentiert das hervorragende Standzeitverhalten ausgewählter Lacke bei Raumtemperatur. Zur Erreichung spezieller Viskositätswerte des Lackes kann man den Lacken alkohollösliche Celluloseether oder Celluloseester direkt zufügen. Figur 3 zeigt, wie beispielsweise der Zusatz von Hydroxypropyl-cellulose mit unterschiedlicher Molekulargewichtsverteilung (niederviskoses Klucel EF bzw. hochviskoses Klucel HF/ Aqualon GmbH) die Viskosität erhöht und damit gestattet, die Schichtdicke des Lackes während der Beschichtung zu beeinflussen (Beispiel Figur 4).

### Beispiel 2

### Herstellung von Lackschichten mit Barrierewirkung

30 ml eines Lack aus 20 ml A5 und 10 ml B5 werden mit 6 ml einer 5 %-igen alkoholischen Kolophonium-Lösung gemischt und damit 100 µm Polyethylenterephthalat-Folie begossen. Nach Tempern (1 h, 80°C) wurde die O₂-Permation bestimmt. Die Gaspermeation war um den Faktor 0.6 gegenüber der unbeschichteten Folie verringert.

### Beispiel 3

### Herstellung von Lackschichten mit schmutz- und wasserabweisender Wirkung

10 ml Lack 10 werden mit 1 ml einer 2 % igen Lösung des Siliconharzes NH 2100/Hüls AG gemischt und auf einen 5 mm starken Träger aus Makrolon (Polycarbonat-Kunststoff) durch Tauchbeguß ("dip coating") aufgetragen. Nach Trocknen an der Luft wird 1 Std. bei 90°C getempert. Die Schichten zeigen beim Besprühen einen wasserabweisenden Effekt; damit übereinstimmend tritt beim Anhauchen keine Trübung auf.

### Beispiel 4

### Herstellung bronzefarbener Schichten

(a) 0.1g 2-Methoxy-4-amino-azobenzol werden unter leichtem Erwärmen in 10 ml Lack 10 gelöst und auf 100 µm Polyesterfolie bzw. Aluminium-Blech aufgetragen. Die Schichten werden 30 min. bei 100°C getempert. Man erhält klare bronzefarbene Überzüge.
(b) Es werden 10 ml der Komponenten **A1** oder **A2** mit 10 ml der Komponenten **B1** oder **B2** gemischt und 1 ml 10 % Wasserstoffperoxid zugefügt. Die gelbe Lösung (Absorptionsmaximum zwischen 400 und 420 nm) wird auf Glas oder Aluminium beschichtet und 30 min bei 130°C getempert. Man erhält gelbe stabile transparente Schichten auf Glas bzw. bronzefarbene metallisch glänzende Schichten auf Aluminium.

### Beispiel 5

### Photokatalytische Schichten

Es werden 10 ml der Komponenten **A3** oder **A5** mit 10 ml der Komponenten **B1** oder **B2** gemischt. Die Lösungen werden durch Dipcoating jeweils auf einen Quarzglas-Träger aufgetragen und nach Trocknung an der Luft 2 Std. bei 400°C getempert. Mit einer Pipette werden auf die Lackschicht ein Kaffeetropfen (analog den Untersuchungen von A. Heller, Acc. Chem. Res. 28 (1995) 503) und ein Tropfen einer 1-%igen Lösung des Farbstoffs Rhodamin 6G nebeneinander aufgetragen. Nach Trocknen an der Luft werden die Prüflinge in einer Belichtungsapparatur mit einer 250 W Hg-Mitteldrucklampe 2 Std. lang bestrahlt. Beide Flecke zeigten danach deutliche Ausbleicherscheinungen im Vergleich zu Flecken auf einem nicht mit Lack beschichteten Quarzglas-Träger.

## Patentansprüche

1. Thermisch härtbarer Zweikomponenten-Lack,
**gekennzeichnet durch**
mindestens eine flüssige Komponente A, die **durch** Hydrolyse eines Gemisches eines Tetraalkoxysilans, eines Epoxyalkylsilans und eines Polyols in einem organischem Lösungsmittel gebildet ist, und mindestens eine flüssige Komponente B, die **durch** Hydrolyse eines Metallalkoholats in einem organischen Lösungsmittel gebildet ist.

2. Zweikomponenten-Lack gemäß Anspruch 1, **dadurch gekennzeichnet, daß** 0.2 bis 10 Feststoffanteile der Komponente A und 1 Feststoffanteil der Komponente B enthalten sind.

3. Zweikomponenten-Lack gemäß Anspruch 1 oder 2, **dadurch gekennzeichnet, daß** die Komponente A vorzugsweise durch Hydrolyse eines Gemisches von 10 bis 80 Volumen-Teilen Tetraalkoxysilan, 10 bis 80 Teilen Epoxyalkyltrialkoxysilan und 1 bis 20 Volumen-Teilen eines Polyols gebildet ist.

4. Zweikomponenten-Lack gemäß einem der Ansprüche 1 bis 3, **dadurch gekennzeichnet, daß** als Polyol 1,1,1-Tris-(hydroxymethyl)propan, Glycerin oder Pentaerythrit eingesetzt wird.

5. Zweikomponenten-Lack gemäß einem der vorhergehenden Ansprüche, **dadurch gekennzeichnet, daß** die Komponente B durch Hydrolyse eines Titan-, Zirkon- oder Aluminium-alkoholats oder deren Gemische gebildet ist.

6. Zweikomponenten-Lack gemäß Anspruch 5, **dadurch gekennzeichnet, daß** die Komponente B unter Zusatz von 0 bis 80 vol-% Tetraalkoxysilan zum Hydrolysegemisch gebildet ist.

7. Zweikomponenten-Lack gemäß einem der vorhergehenden Ansprüche, **dadurch gekennzeichnet, daß** als organische Lösungsmittel Alkohole mit 1 bis 6 Kohlenstoffatomen verwendet werden.

8. Zweikomponenten-Lack gemäß einem der vorhergehenden Ansprüchen, **gekennzeichnet durch** den Zusatz
- von alkohollöslichen Celluloseethern und Celluloseestern zur Steuerung der rheologischen Eigenschaften,
- von alkohollöslichen Polyalkylsiloxanen oder Polyoxyalkylensiloxanen zur Erhöhung der schmutz- und wasserabweisenden Wirkung,
- von alkohollöslicher Naturharzen zur Erhöhung der Barrierewirkung gegenüber Gasen und leichtflüchtigen Stoffen,
- einer oxidierenden Verbindung zur Erzielung bronzefarbenener Überzüge, und/oder
- von Farbstoffen und/oder bioziden Verbindungen.

9. Verfahren zur Beschichtung eines Objekts mit einem Zweikomponenten-Lack gemäß einem der Ansprüche 1 bis 8, **dadurch gekennzeichnet, daß** nach Aufbringung eines Lackauftrags auf einer Objektoberfläche und Entfernen des Lösungsmittel der Lack thermisch ausgehärtet wird.

10. Verfahren gemaß Anspruch 9, bei dem die Aushärtung durch Wärmezufuhr oder Mikrowellenbestrahlung erfolgt.

11. Verfahren gemaß Anspruch 9, bei dem der Lack zur Aushärtung mindestens 30 min auf 80°C erwärmt wird.

12. Verwendung eines Zweikomponenten-Lacks gemäß einem der Ansprüche 1 bis 8
zum mechanischen und/oder chemischen Schutz von Formteilen aus Metall, Kunststoff, Holz, Stein, polymeren Folien, Geweben oder Glas, oder
als Photokatalysator zum Abbau von organischen Schadstoffen.
